# EUROPEAN PATENT APPLICATION

(11) **EP 3 766 655 A1**
(43) Date of publication of application: **20.01.2021**
(21) Application number: 19768312.1
(22) Date of filing: 08.03.2019
(51) Int. Cl.: B29C 45/37

(54) **INJECTION MOLDING MOLD**

(30) Priority: 12.03.2018 JP 2018044423
(71) Applicant: Kumi Kasei Co., Ltd, Tokyo 101-0042 (JP)
(72) Inventor: OKAHARA Etsuo, Haga-gun, Tochigi 321-3325 (JP)
(74) Representative: V.O.
(86) International application number: PCT/JP2019/009385
(87) International publication number: WO 2019/176781

(57) **Abstract**

Provided is an injection molding die including a cavity mold and a core mold that is freely openable and closable with respect to the cavity mold, wherein, in a back side molding surface of the core mold for molding a back surface side of a resin molded article, a gas storage concave portion is formed by securing a depth of 0.15 to 1.00 mm to be recessed from the back side molding surface, so as to secure an unfilled space in which a molten resin is not filled.

## Description

### [Technical Field]

The present invention relates to an injection molding die used for injection molding of a resin molded article.

Priority is claimed on Japanese Patent Application No. 2018-044423, filed March 12, 2018, the content of which is incorporated herein by reference.

### [Background Art]

Resin molded articles used for the interior and exterior of automobiles, housings of home appliances, or the like are in many cases injection molded using, for example, resin materials such as polyolefin resins, polystyrene resins, ABS resins, polycarbonate resins, and polyamide resins.

The so-called sink marks may be generated in the resin molded articles obtained by injection molding due to the effect of volume shrinkage during molding. When sink marks are generated on the design surface (for example, a surface having a pattern such as an embossed or satin pattern or mirror-like gloss) of the resin molded article, there is a possibility of impairing the aesthetic appearance and reducing the quality of commodities.

In order to solve the above-described problems, for example, a molding method (hereinafter, also referred to as a mold temperature difference molding method) has been proposed in which, at the time of molding a resin molded article, for a mold into which a resin material in a heated and molten state is allowed to flow, by keeping the temperature of a cavity mold for molding the design surface side of the resin molded article higher than the temperature of a core mold for molding the back surface (non-design surface) side of the resin molded article opposite to the design surface side, the design surface of the resin molded article is brought into close contact with the cavity mold, and the back surface of the resin molded article is separated from the core mold to concentrate sink marks on the back surface of the resin molded article, thereby preventing the generation of sink marks on the design surface of the resin molded article (for example, Patent Document 1).

### [Citation List]

### [Patent Document]

[Patent Document 1] Japanese Unexamined Patent Application, First Publication No. 2012-162007

### [Summary of Invention]

### [Technical Problem]

However, even in the above-described mold temperature difference molding method, for example, in those cases where ribs having a length of 5 mm or more are arranged substantially in parallel on the back surface (non-design surface), opposite to the design surface, of a main plate portion of the molded product where the design surface is formed, at an interval of twice or less that of the thickness of the main plate portion of the molded article, or in those cases where there is a portion surrounded by the ribs and there is no setting for an ejector pin, an inclined core or the like at corresponding positions between the ribs of the resin molded article in the core mold, since it is not possible to freely generate sink marks in a region between the ribs on the back surface of the main plate portion of the molded article, as a result, sink marks were generated at times on the design surface of the main plate portion of the molded article.

The problem to be solved by an aspect of the present invention is to provide, even when there is no outside air introduction path, such as an ejector pin hole in which an ejector pin is arranged and a drive shaft arrangement hole in which an inclined core drive shaft is arranged, and there is a region where it is difficult to introduce outside air to a back side surface of a resin molded article, on a molding surface (back molding surface) of a core mold for molding a back surface side opposite to a design surface of the resin molded article, an injection molding die capable of preventing the generation of sink marks on the design surface of the molded article by concentrating sink marks on the back surface side portion of the molded article molded by this region.

### [Solution to Problem]

In order to solve the above problems, the present invention provides the following aspects.

An injection molding die of a first aspect includes: a cavity mold in which a concave portion for forming a design surface of a resin molded article is formed; and a core mold that is present in a freely openable and closable manner with respect to the aforementioned cavity mold, and forms a cavity including the aforementioned concave portion with the aforementioned cavity mold when closed and combined with the aforementioned cavity mold, wherein in the aforementioned core mold, a back side molding surface for molding a back surface side of the aforementioned resin molded article opposite to the aforementioned design surface, and a gas storage concave portion for securing a depth of 0.15 to 1.00 mm to be recessed from the aforementioned back side molding surface and securing an unfilled space in which a molten resin allowed to flow into the aforementioned cavity is not filled, are formed.

The aforementioned gas storage concave portion may be formed to have a width of 0.3 to 1.0 mm and a length of 0.3 to 10 mm.

A region in which the aforementioned gas storage concave portion is formed at a density of 2 or more per 1 cm² may be present on the aforementioned back side molding surface of the aforementioned core mold.

The aforementioned resin molded article has a main plate portion forming the aforementioned design surface, and a rib protruding from a back surface of the aforementioned main plate portion opposite to the aforementioned design surface, wherein in the aforementioned core mold, a back side molding main surface that serves as a part of the aforementioned back side molding surface and molds the back surface of the aforementioned main plate portion of the aforementioned resin molded article, and a rib molding groove recessed from the aforementioned back side molding main surface corresponding to the rib of the aforementioned resin molded article are formed; and on the aforementioned back side molding main surface of the aforementioned core mold, one or both of an inter-rib groove region which is a region between the aforementioned rib molding grooves present at an interval of not more than twice the thickness of the aforementioned main plate portion of the aforementioned resin molded article and in parallel to each other over a length of 5 mm or more, and a rib groove surrounding inner region which is an inner region surrounded by the aforementioned rib molding groove formed endlessly, is present; and the aforementioned gas storage concave portion may be formed in one or both of the aforementioned inter-rib groove region and the aforementioned rib groove surrounding inner region.

### [Advantageous Effects of Invention]

According to the injection molding die according to the aspect of the present invention, as the molten resin in a mold-clamped state (molded resin in a hot molten state) is injected and filled into the cavity, the gas in the cavity is stored in the gas storage concave portion while being compressed, and the unfilled space in which the molten resin is not filled remains in the gas storage concave portion at a time point where the cavity is completely filled with the molten resin. After the cavity is completely filled with the molten resin, when the volume of the resin molded article in the cavity shrinks due to a decrease in temperature, the gas in the unfilled space of the gas storage concave portion enters between the surface of the back surface side portion of the resin molded article side and the back side molding surface of the core mold from the gas storage concave portion due to the gas pressure, and separates the back surface side portion of the resin molded article from the back side molding surface of the core mold. As a result, sink marks can be generated freely in the portion on the back surface side of the resin molded article, and it becomes possible to concentrate the sink marks of the resin molded article in the portion on the back surface side of the resin molded article and to prevent the generation of sink marks on the design surface of the resin molded article.

### [Brief Description of Drawings]

FIG. 1 is a view showing an injection molding die according to a first embodiment of the present invention, and is a plan view showing a structure of a core mold as seen, through a cavity mold, from the cavity mold side.
FIG. 2 is a view (front sectional view) showing a state in which a resin molded article is present in a cavity secured inside the die in a cross section taken along a line A-A of the injection molding die of FIG. 1.
FIG. 3 is a view (side sectional view) showing a state in which a resin molded article is present in a cavity secured inside the die, in a cross section taken along a line B-B of the injection molding die of FIG. 1.
FIG. 4 is an enlarged cross-sectional view showing a region C including a gas storage concave portion in FIG. 3 in an enlarged manner.
FIG. 5 is a cross-sectional view showing an example of a state where a molten resin is filled in the vicinity of the gas storage concave portion when filling of the cavity of the injection molding die of FIG. 1 with the molten resin has been completed.
FIG. 6 is a cross-sectional view showing another example of the state where a molten resin is filled in the vicinity of the gas storage concave portion when filling of the cavity of the injection molding die of FIG. 1 with the molten resin has been completed.
FIG. 7 is a view showing an injection molding die according to a second embodiment of the present invention, and is a plan view showing a structure of a core mold as seen, through a cavity mold, from the cavity mold side.
FIG. 8 is a cross-sectional view taken along a line E-E of the injection molding die of FIG. 7.
FIG. 9 is a view showing an injection molding die according to a third embodiment of the present invention, and is a plan view showing a structure of a core mold as seen, through a cavity mold, from the cavity mold side.
FIG. 10 is a view (front sectional view) showing a state in which a resin molded article is present in a cavity secured inside the die in a cross section taken along a line F-F of the injection molding die of FIG. 9.
FIG. 11 is a view (side sectional view) showing a state in which a resin molded article is present in a cavity secured inside the die, in a cross section taken along a line G-G of the injection molding die of FIG. 9.
FIG. 12A is a photographic image obtained by taking a picture of the back surface side of a resin molded article of an example of a prototype manufactured using the injection molding die according to an embodiment of the present invention.
FIG. 12B is a photographic image obtained by taking a picture of the design surface side of a resin molded article of an example of a prototype manufactured using the injection molding die according to an embodiment of the present invention.
FIG. 13A is a photographic image obtained by taking a picture of the back surface side of a resin molded article of a comparative example.
FIG. 13B is a photographic image obtained by taking a picture of the design surface side of a resin molded article of a comparative example.

### [Description of Embodiments]

Hereinafter, an injection molding die according to an embodiment of the present invention will be described with reference to the drawings. The embodiment described below is merely an example for facilitating understanding of the present invention, and does not limit the present invention. In other words, the shapes, sizes, arrangements, and the like of the members described below can be changed or improved without departing from the gist of the present invention, and the present invention includes equivalents thereof.

### (First embodiment)

First, an injection molding die according to a first embodiment of the present invention will be described.

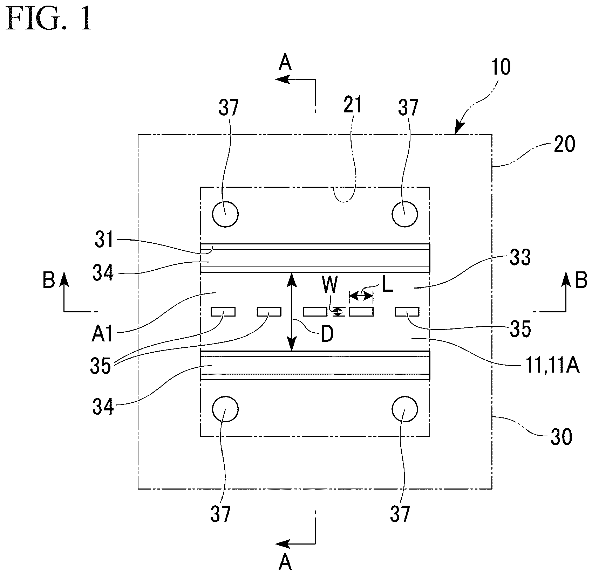

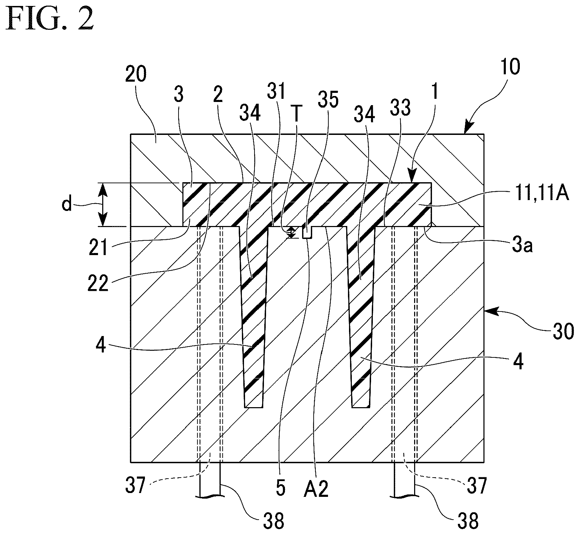

As shown in FIGS. 1 and 2, an injection molding die 10 of the present embodiment includes a cavity mold 20 in which a concave portion 21 (hereinafter, also referred to as a concave portion for molding) for forming a design surface 2 of a resin molded article 1 (see FIG. 2) is formed, and a core mold 30 that opens and closes with respect to the cavity mold 20.

FIGS. 1 and 2 are views showing the injection molding die 10 in a mold-clamped state in which the core mold 30 is closed and combined with the cavity mold 20, and FIG. 2 is a cross-sectional view (front sectional view) taken along the line A-A of FIG. 1.

FIG. 1 is a view (plan view) showing a structure of the core mold 30 as seen, through the cavity mold 20, from the cavity mold 20 side.

FIG. 2 shows a state in which the resin molded article 1 formed by cooling and solidification of a molten resin (molded resin in a hot molten state) filled in the cavity 11 is present in the cavity 11 serving as a molding space of the resin molded article 1 and secured between an inner surface of the molding concave portion 21 of the cavity mold 20 and the core mold 30.

As shown in FIG. 2, the design surface 2 of the resin molded article 1 is formed by an inner bottom surface 22 of the molding concave portion 21 of the cavity mold 20.

Hereinafter, the inner bottom surface 22 of the molding concave portion 21 of the cavity mold 20 is also referred to as a design surface molding surface.

As shown in FIGS. 1 and 2, a molding surface 31 (hereinafter, also referred to as a back side molding surface) for molding a back surface side opposite to the design surface 2 of the resin molded article 1 is formed on the core mold 30.

When the core mold 30 is closed and combined with the cavity mold 20, the back side molding surface 31 of the core mold 30 secures the cavity 11 with the inner surface of the molding concave portion 21 of the cavity mold 20.

As shown in FIG. 2, the cavity 11 of the injection molding die 10 is formed by closing an opening (opening on the core mold 30 side) opposite to the design surface molding surface 22 of the cavity mold 20 with the core mold 30 which is closed and combined with the cavity mold 20.

As shown in FIGS. 1 and 2, the back side molding surface 31 of the core mold 30 is a surface facing the cavity 11 in the core mold 30 closed and combined with the cavity mold 20.

As shown in FIG. 2, the injection molding die 10 of the illustrated example molds the resin molded article 1 having a main plate portion 3 that forms the design surface 2 and a rib 4 protruding from a back surface 3a opposite to the design surface 2 of the main plate portion 3 (hereinafter, also referred to as the main plate portion back surface, or the main plate portion back surface of the molded article).

The core mold 30 is formed with a back side molding main surface 33 for molding the main plate portion back surface 3a of the resin molded article 1 and a rib molding groove 34 recessed from the back side molding main surface 33.

The resin molded article 1 molded by the injection molding die 10 shown in FIGS. 1 and 2 includes a pair of ribs 4 formed by being extended parallel to each other on the main plate portion back surface 3a.

In the core mold 30, a pair of rib molding grooves 34 are formed parallel to each other at intervals in the extending direction of the main plate portion back surface 3a.

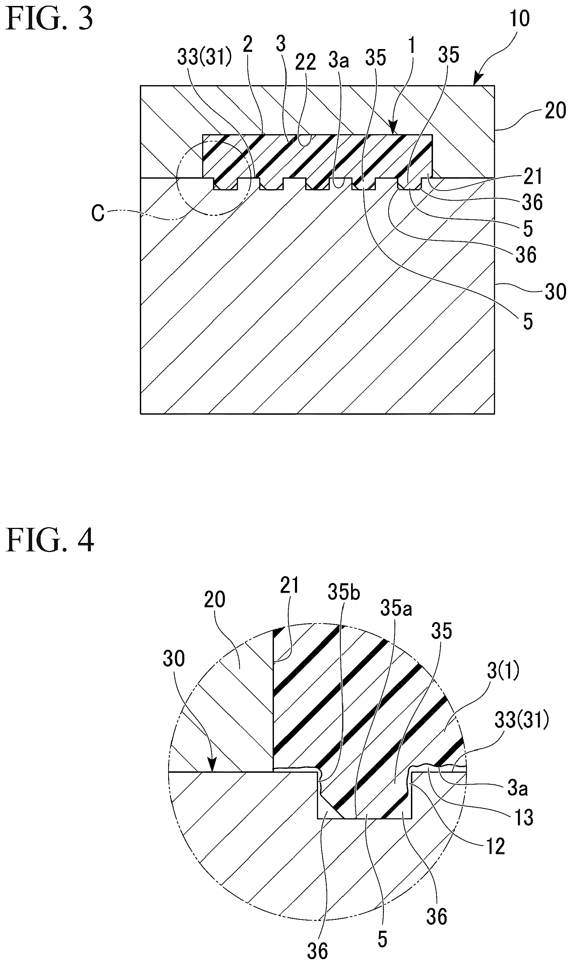

In the core mold 30 of the injection molding die 10 shown in FIGS. 1 and 2, a gas storage concave portion 35 is formed which is recessed while securing a depth T of 0.15 to 1.00 mm from the back side molding main surface 33. At the time of filling in the cavity 11 of the injection molding die 10 with a molten resin, an unfilled space 36 (see FIGS. 3 to 5) in which the molten resin is not filled is secured inside the gas storage concave portion 35.

The gas storage concave portions 35 are formed at a plurality of places in a region A1 (hereinafter, also referred to as an inter-rib groove region) between the pair of rib molding grooves 34 on the back side molding main surface 33 of the core mold 30. The depth T of the gas storage concave portion 35 is much smaller than the depth of the rib molding groove 34 from the main plate portion back surface 3a of the molded article.

The resin molded article 1 molded by the injection molding die 10 shown in FIGS. 1 and 2 includes, separately from the ribs 4, a plurality of protrusions 5 (hereinafter, also referred to as sink mark adjusting protrusions) molded by the gas storage concave portion 35 of the core mold 30 and protruded with a protrusion dimension of 1 mm or less from the main plate portion back surface 3a.

The sink mark adjusting protrusions 5 are formed at a plurality of places in a region A2 (hereinafter, also referred to as an inter-rib region) between the pair of ribs 4 on the main plate portion back surface 3a of the molded article.

The protrusion dimension of the sink mark adjusting protrusion 5 from the main plate portion back surface 3a is much smaller than the protrusion dimension of the rib 4 from the main plate portion back surface 3a.

The cavity 11 of the injection molding die 10 in a mold-clamped state is injection-filled with a molding resin in a hot molten state (hereinafter, also referred to as a molten resin) via a gate (not shown).

As shown in FIGS. 2 to 4, the resin molded article 1 is formed (molded) into a shape along the inner surface of the cavity 11 by cooling and solidification of the molten resin filled in the cavity 11 of the injection molding die 10 in a mold-clamped state.

Further, the resin molded article 1 is molded in the cavity 11 of the injection molding die 10, and then taken out of the injection molding die 10 by subjecting the injection molding die 10 to mold opening.

Molding of the resin molded article 1 using the injection molding die 10 is performed by using a mold temperature control device (not shown) while keeping the temperature of the cavity mold 20 higher than the temperature of the core mold 30.

The molding of the resin molded article 1 while keeping the temperature of the cavity mold 20 higher than the temperature of the core mold 30 effectively contributes to maintaining the close contact of the molding resin forming the design surface 2 of the resin molded article 1 with the design surface molding surface 22 of the cavity mold 20.

The injection molding die 10 includes a mold temperature control device (not shown).

Inclusion of a mold temperature control device capable of maintaining the temperature of the cavity mold 20 at a higher temperature than the temperature of the core mold 30 is also commonly applied to the injection molding dies in other embodiments according to the present invention.

The back side molding main surface 33, the inner surface of the rib molding groove 34, and the inner surface of the gas storage concave portion 35 are each a part of the back side molding surface 31 of the core mold 30.

As shown in FIG. 2, the main plate portion 3 of the resin molded article 1 (hereinafter, also referred to as a molded article main plate portion) is molded, in the cavity 11, in a region (main plate portion molding region) on the inner surface side of the molding concave portion 21 of the cavity mold 20 from the back side molding main surface 33 of the core mold 30.

The ribs 4 of the resin molded article 1 are formed by a molten resin filled in the cavity 11 of the injection molding die 10 in a mold-clamped state, which is filled in the rib molding groove 34.

The sink mark adjusting protrusion 5 of the resin molded article 1 is formed by molding, cooling and solidification of the molten resin filled in the gas storage concave portion 35 of the core mold 30.

A portion of the cavity 11 of the injection molding die 10 other than the gas storage concave portion 35 is hereinafter also referred to as a cavity main portion 11A.

The molten resin filled in the cavity 11 flows into the cavity main portion 11A from the gate. The molten resin that has flowed into the cavity main portion 11A of the injection molding die 10 can also be allowed to flow into the gas storage concave portion 35 from the cavity main portion 11A.

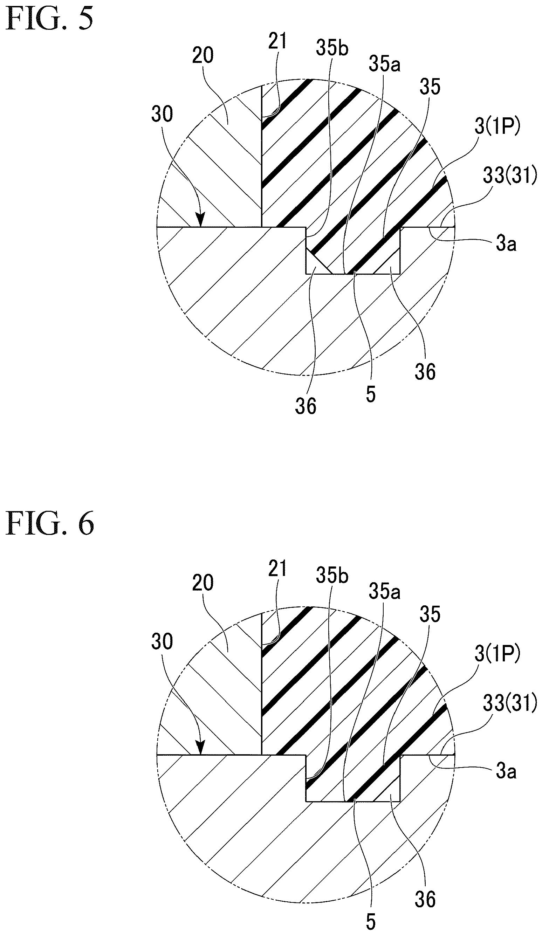

However, when the molten resin is caused to flow into the cavity 11 of the injection molding die 10, the unfilled space 36 in which the molten resin is not filled (see FIG. 5) is secured inside the gas storage concave portion 35.

In the resin molded article 1 molded by filling the cavity 11 of the injection molding die 10 with the molten resin in a mold-clamped state, the sink mark adjusting protrusion 5 having a size smaller than the inner surface dimension of the gas storage concave portion 35 is formed.

The gas storage concave portion 35 in FIGS. 1 and 2 is a concave portion having a cross-sectional dimension of a width W of 0.3 to 1.0 mm and a length L of 0.3 to 10 mm which is recessed from the back side molding main surface 33 of the core mold 30 (back side molding surface 31) at a depth T of 0.15 to 1.00 mm.

The range of the cross-sectional dimension of the gas storage concave portion 35 where the width W is from 0.3 to 1.0 mm and the length L is from 0.3 to 10 mm also applies to the dimension of the opening of the gas storage concave portion 35 on the back side molding main surface 33 of the core mold 30.

The gas storage concave portion 35 illustrated in FIGS. 1 and 2 is a concave portion having a rectangular cross-sectional shape (a cross-sectional shape perpendicular to the depth direction of the gas storage concave portion 35; the same applies hereinafter), which is recessed with a constant cross-sectional dimension over the entire depth direction from the back side molding main surface 33 of the core mold 30. More specifically, the gas storage concave portion 35 illustrated in FIGS. 1 and 2 is formed in a rectangular groove shape (square groove shape) in cross section.

However, the cross-sectional shape of the gas storage concave portion 35 is not limited to a rectangle, and may be, for example, an ellipse, a circle, a semicircle, a rhombus, or the like, but a rectangle in which the gas easily remains (the unfilled space 36 is easily formed) is preferred. The cross-sectional dimension of the gas storage concave portion 35 may be within a range of a width W of 0.3 to 1.0 mm and a length L perpendicular to the width direction of 0.3 to 10 mm, and various cross-sectional shapes can be adopted as more specific cross-sectional shapes thereof.

For the width W (width dimension) and the length L (length dimension) of the cross-sectional dimension of the gas storage concave portion 35, when the cross-sectional shape of the gas storage concave portion 35 is elongated, the dimension in the longitudinal direction thereof is taken as the length L and the dimension in a direction perpendicular to the longitudinal direction is taken as the width W.

When the cross section perpendicular to the depth T direction of the gas storage concave portion 35 is, for example, a square, a circle, or the like, and there is no difference in the dimensions of the cross sections in the directions orthogonal to each other, the width W (width dimension) and the length L (length dimension) are treated as being the same as each other.

Further, the gas storage concave portion 35 only needs to ensure a cross-sectional dimension of 0.3 to 1.0 mm in width W over the entire depth direction thereof and 0.3 to 10 mm in length L perpendicular to the width direction, and is not limited to one extending at a constant cross-sectional dimension over the entire depth direction. The cross-sectional dimension of the gas storage concave portion 35 is not constant in the depth direction within a range of a width W of 0.3 to 1.0 mm and a length L perpendicular to the width direction of 0.3 to 10 mm, and it is also possible to adopt a configuration in which there are portions having different cross-sectional dimensions from each other in the depth direction.

FIG. 3 is a cross-sectional view taken along the line B-B of the injection molding die 10 of FIG. 1, and shows a structure near a region where the gas storage concave portion 35 of the core mold 30 is formed.

FIG. 4 is an enlarged cross-sectional view showing a region C including the gas storage concave portion 35 in FIG. 3 in an enlarged manner.

FIGS. 5 and 6 are cross-sectional views showing a state in which a molten resin is filled in the vicinity of the gas storage concave portion 35 when the filling of the molten resin IP into the cavity 11 of the injection molding die 10 in a mold-clamped state with the molten resin IP has been completed. FIGS. 5 and 6 show examples of the range in which the unfilled space 36 in the gas storage concave portion 35 exists, respectively.

FIG. 4 shows a state in which the molten resin 1P in FIG. 5 has been cooled and solidified, and volume shrinkage associated with a decrease in temperature has occurred.

The inventors of the present invention have verified by various tests that if the gas storage concave portion 35 is used, which has a depth T from the back side molding main surface 33 of 0.15 to 1.00 mm, a width W of 0.3 to 1.0 mm, and a length L of 0.3 to 10 mm, the unfilled space 36 is easily secured when the molten resin flows into the cavity main portion 11A.

As shown in FIGS. 3 and 4, the unfilled space 36 in the gas storage concave portion 35 is secured on a bottom surface 35a side of the gas storage concave portion 35. Further, as shown in FIGS. 3 to 6, there is a tendency that the unfilled space 36 is easily secured in the vicinity of an inside corner portion between the bottom surface 35a of the gas storage concave portion 35 and an inner wall surface 35b as compared with the vicinity of the central portion of the bottom surface 35a of the gas storage concave portion 35.

The inside corner portion between the bottom surface 35a of the gas storage concave portion 35 and the inner wall surface 35b extends along the outer periphery of the bottom surface 35a of the gas storage concave portion 35.

The unfilled space 36 is formed in a form so as to be, for example, extended over the entire circumference or substantially the entire circumference in the circumferential direction of the inside corner portion along the outer periphery of the bottom surface 35a of the gas storage concave portion 35 (FIG. 5); secured in one region about half the size of, or narrower than, the inside corner portion in the circumferential direction (FIG. 6); or scattered at a plurality of places in the circumferential direction of the inside corner portion.

In the injection filling of the molten resin IP into the cavity 11 of the injection molding die 10 in the mold-clamped state, as the filling of the molten resin 1P into the cavity main portion 11A proceeds, the gas inside the cavity main portion 11A such as the air inside the cavity main portion 11A and the gas released from the molten resin IP is compressed by the molten resin IP flowing in the cavity main portion 11A toward the downstream side in the filling direction of the molten resin IP. The gas in the cavity 11A is also compressed into the gas storage concave portion 35 of the core mold 30 as the filling of the molten resin IP into the cavity main portion 11A proceeds.

As described previously, the molten resin that has flowed into the cavity main portion 11A of the injection molding die 10 of FIGS. 1 and 2 can also flow into the gas storage concave portion 35 from the cavity main portion 11A. However, the gas storage concave portion 35 is a concave portion having a small cross-sectional dimension (the width W is from 0.3 to 1.0 mm and the length L is from 0.3 to 10 mm). Further, the gas storage concave portion 35 is located at a position shifted from the flow path of the molten resin IP inside the cavity main portion 11A of the injection molding die 10. For this reason, in the gas storage concave portion 35, a flow path in which the molten resin IP flows in from the cavity main portion 11A and flows out from the gas storage concave portion 35 to the cavity main portion 11A is hardly formed, and the discharge of gas inside the gas storage concave portion 35 due to the flow of the molten resin IP is less likely to occur.

Therefore, as shown in FIGS. 5 and 6, the unfilled space 36 in which the molten resin 1P is not filled due to the residual gas is easily secured in the gas storage concave portion 35.

The flow of the molten resin IP from the cavity main portion 11A into the gas storage concave portion 35 proceeds toward the bottom surface 35a of the gas storage concave portion 35 (hereinafter, also referred to as the gas storage concave portion bottom surface) from the opening portion of the gas storage concave portion 35 on the back side molding main surface 33. The molten resin 1P that has flowed into the gas storage concave portion 35 from the cavity main portion 11A is filled into the gas storage concave portion 35 while compressing the gas in the gas storage concave portion 35 toward the bottom surface 35a side of the gas storage concave portion 35. As a result, as shown in FIGS. 3 to 6, the unfilled space 36 in the gas storage concave portion 35 is easily secured at a bottom portion (the bottom surface 35a side) of the gas storage concave portion 35.

On the whole, the filling of the molten resin IP into the gas storage concave portion 35 is broadly classified into cases where the molten resin 1P is filled into the gas storage concave portion 35 in a state in which a partially spherical end surface is formed by the surface tension in the gas storage concave portion 35 (hereinafter, also referred to as bottom portion center pre-filling), and cases where the molten resin IP that has flowed in along a part of the inner surface 35b of the gas storage concave portion 35 first reaches the gas storage concave portion bottom surface 35a (hereinafter, also referred to as partial inner periphery pre-filling).

As shown in FIGS. 3 to 6, the unfilled space 36 is secured more easily in the vicinity of the inside corner portion between the bottom surface 35a and the inner wall surface 35b of the gas storage concave portion 35 than in the vicinity of the central portion of the bottom surface 35a of the gas storage concave portion 35 in both cases of the bottom portion center pre-filling and the partial inner periphery pre-filling.

In the case of the bottom portion center pre-filling, the molten resin IP first reaches the central portion of the gas storage concave portion bottom surface 35a, and the gas in the gas storage concave portion 35 is compressed in the vicinity of the inside corner portion between the bottom surface 35a and the inner wall surface 35b of the gas storage concave portion 35 as the filling proceeds thereafter.

As a result, in the case of the bottom portion center pre-filling, as shown in FIGS. 5 and 6, in the vicinity of the central portion of the gas storage concave portion bottom surface 35a, the molten resin 1P is filled so as to be in contact with the gas storage concave portion bottom surface 35a, and the unfilled space 36 is likely to be secured in a part or the entire circumference in the circumferential direction of the inside corner portion between the bottom surface 35a and the inner wall surface 35b of the gas storage concave portion 35.

In the case of the partial inner periphery pre-filling, the molten resin 1P to be filled in the gas storage concave portion 35 is filled into the gas storage concave portion 35 from the opening portion side toward the bottom surface 35a in a state where a tapered end surface having a portion that first reaches the gas storage concave portion bottom surface 35a as a top portion is formed.

In the case of the partial inner periphery pre-filling, after the molten resin IP that has flowed into the gas storage concave portion 35 along a part of the inner surface 35b first reaches the gas storage concave portion bottom surface 35a, as the filling of the molten resin IP into the gas storage concave portion 35 proceeds, the gas in the gas storage concave portion 35 is compressed into a part of the circumferential direction of the inside corner portion between the bottom surface 35a and the inner wall surface 35b of the gas storage concave portion 35. The portion of the molten resin IP that first reaches the gas storage concave portion bottom surface 35a flows along the gas storage concave portion bottom surface 35a as the filling of the molten resin IP into the gas storage concave portion 35 proceeds.

As a result, in the case of partial inner periphery pre-filling, as shown in FIGS. 5 and 6, in the vicinity of the central portion of the gas storage concave portion bottom surface 35a, the molten resin IP is filled so as to be in contact with the gas storage concave portion bottom surface 35a, and the unfilled space 36 is likely to be secured in a part in the circumferential direction of the inside corner portion between the bottom surface 35a and the inner wall surface 35b of the gas storage concave portion 35.

In the unfilled space 36 of the gas storage concave portion 35, in addition to the air existing in the gas storage concave portion 35 before the start of the resin filling into the cavity main portion 11A, the gas that has flowed from the cavity main portion 11A into the gas storage concave portion 35 is also stored due to the progress of filling of the molten resin IP into the cavity main portion 11A.

For the unfilled space 36 to be secured in the gas storage concave portion 35 by the filling of the molten resin IP into the gas storage concave portion 35, for example, a state of existing only in the vicinity of the central portion of the bottom surface 35a of the gas storage concave portion 35, a state of being formed along the entire gas storage concave portion bottom surface 35a, or the like can also be adopted.

After the completion of the filling of the molten resin IP into the cavity 11, when the resin molded article 1 in the cavity 11 undergoes volume shrinkage due to a decrease in temperature, the resin pressure of the molding resin of the resin molded article 1 decreases as the volume shrinkage proceeds. As a result, the gas in the unfilled space 36 of the gas storage concave portion 35 is blown out from the gas storage concave portion 35 toward the cavity main portion 11A side by the pressure.

Volume shrinkage due to a temperature decrease after molding of the resin molded article 1 in the cavity 11 also occurs in the resin filled in the gas storage concave portion 35 (the resin forming the sink mark adjusting protrusion 5).

The gas in the unfilled space 36 of the gas storage concave portion 35 reaches the cavity main portion 11A through a minute gap 12 formed between the sink mark adjusting protrusion 5 and the inner wall surface 35b of the gas storage concave portion 35 by the sink mark generated by the volume shrinkage due to the temperature decrease after the molding of the sink mark adjusting protrusion 5.

A portion of the resin forming the sink mark adjusting protrusion 5 facing the unfilled space 36 in the gas storage concave portion 35 can freely generate sink marks due to the gas pressure in the unfilled space 36.

When the resin molded article 1 in the cavity 11 undergoes volume shrinkage due to a decrease in temperature after molding, the gas in the unfilled space 36 enters into the gap 12 formed between the inner wall surface 35b of the gas storage concave portion 35 and the sink mark adjusting protrusion 5 by the sink mark of the sink mark adjusting protrusion 5. The portion of the sink mark adjusting protrusion 5 facing the gap 12 where the gas in the unfilled space 36 has entered can freely generate sink marks. As a result, the gas in the unfilled space 36 gradually expands a region of the gap 12 along the inner wall surface 35b of the gas storage concave portion 35 and finally reaches the cavity main portion 11A.

If a concave portion is filled with a part of the resin forming the resin molded article and the unfilled space 36 is not secured, and there is no means for allowing gas to enter between the resin in the concave portion and the inner surface of the concave portion, it is difficult to separate the resin in the concave portion from the inner surface of the concave portion by the volume shrinkage due to cooling after molding, and the generation of the gap 12 is suppressed or prevented.

In the configuration in which the unfilled space 36 is secured in the gas storage concave portion 35, since the gap 12 can be freely generated in the sink mark adjusting protrusion 5 by the gas in the unfilled space 36, it is possible to separate the sink mark adjusting protrusion 5 from the inner wall surface 35b of the gas storage concave portion 35 by the sink mark and to allow the gas in the unfilled space 36 to reach the cavity main portion 11A.

In the molding of the resin molded article 1 using the injection molding die 10, when the resin molded article 1 in the cavity 11 undergoes volume shrinkage due to a decrease in temperature after molding, since the gas in the unfilled space 36 can be discharged to the cavity main portion 11A side from the gas storage concave portion 35, the sink marks can be freely generated on the back surface side of the molded article main plate portion 3.

Sink marks can be freely generated in a portion of the back surface 3a of the molded article main plate portion which comes into contact with the gas released from the unfilled space 36 to the cavity main portion 11A. Since the portion of the back surface side of the molded article main plate portion 3 that is separated from the back side molding main surface 33 of the core mold 30 due to the generation of sink marks is brought into contact with a gas that has entered a gap 13 secured with the back side molding main surface 33 (the gas released from the unfilled space 36), the generation of sink marks is not restricted, and the sink marks can be freely generated.

As shown in FIG. 4, the gas released from the unfilled space 36 of the gas storage concave portion 35 is allowed to enter between a region on the back surface side of the molded article main plate portion 3 where the sink marks are generated and the back side molding main surface 33 of the core mold 30 by the pressure. A region in which the gas released from the unfilled space 36 of the gas storage concave portion 35 has entered is allowed to expand between the molded article main plate portion back surface 3a and the back side molding main surface 33 of the core mold 30.

As a result, as shown in FIG. 4, the back surface 3a of the molded article main plate portion 3 is separated from the back side molding main surface 33 of the core mold 30 by the sink marks generated on the back surface side of the molded article main plate portion 3.

In the molding of the resin molded article 1 using the injection molding die 10, sink marks caused by the volume shrinkage due to the temperature decrease of the resin molded article 1 can be freely generated on the back surface side of the molded article main plate portion 3, while keeping the design surface 2 formed in the resin molded article 1 in close contact with the design surface molding surface 22 of the cavity mold 20. As a result, in the molding of the resin molded article 1 using the injection molding die 10, sink marks caused by the volume shrinkage due to the temperature decrease of the resin molded article 1 can be concentrated on the back surface side of the molded article main plate portion 3, and the generation of sink marks on the design surface 2 of the resin molded article 1 can be prevented.

The larger the amount of gas ejected from the gas storage concave portion 35 toward the cavity main portion 11A side, the larger the sink marks on the back surface side of the molded article main plate portion 3 caused by the volume shrinkage due to the temperature decrease of the resin molded article 1, and the sink marks on the design surface 2 side become relatively smaller.

Therefore, by increasing the amount of gas stored in the unfilled space 36 of the gas storage concave portion 35, and ensuring a large amount of gas to be ejected from the gas storage concave portion 35 toward the cavity main portion 11A side when the resin molded article 1 undergoes volume shrinkage due to a temperature decrease after molding, sink marks on the design surface 2 can be suppressed, and the generation of sink marks on the design surface 2 can also be eliminated.

The amount of gas stored in the unfilled space 36 of the gas storage concave portion 35 can be adjusted by the depth T, width W, length L, and number of the gas storage concave portion 35. The larger the depth T, width W, and length L of the gas storage concave portion 35, respectively, the larger the amount of gas stored in the unfilled space 36.

The larger the number of (the number of formed) gas storage concave portions 35, the larger the amount of gas stored in the unfilled space 36.

The amount of gas ejected from the gas storage concave portion 35 to the cavity main portion 11A side, which is necessary for suppressing or eliminating sink marks on the design surface 2 to an invisible state, varies depending on the thickness of the molded article main plate portion 3.

The amount of gas ejected from the gas storage concave portion 35 to the cavity main portion 11A side, which is necessary for suppressing or eliminating sink marks on the design surface 2 to an invisible state, increases as the thickness of the molded article main plate portion 3 increases, and decreases as the thickness of the molded article main plate portion 3 decreases.

The depth T, width W, length L, and number of the gas storage concave portion 35 are determined in consideration of the thickness of the molded article main plate portion 3 and the like.

The gas storage concave portion 35 can be formed by, for example, cutting the surface of the core mold 30 (back side molding main surface 31) made of metal.

For the cutting of the core mold 30 for forming the gas storage concave portion 35, laser cutting or the like can also be employed in addition to mechanical cutting.

A method of forming the gas storage concave portion 35 by cutting the core mold 30 is advantageous, for example, when the depth T, width W, length L, and number of the gas storage concave portion 35 are determined by trial and error, while increasing the depth T, width W, length L, and number of the gas storage concave portion 35 sequentially on a trial and error basis.

The depth T (depth dimension) of the gas storage concave portion 35 is preferably 0.15 mm or more and less than 1 mm, and more preferably from 0.2 mm to 0.5 mm.

If the depth T of the gas storage concave portion 35 is less than 0.15 mm, the volume of the unfilled space 36 of the gas storage concave portion 35 and the amount of stored gas are insufficient, so that the effects of securing the degree of freedom of the sink marks on the back surface 3a side of the main plate portion 3 of the resin molded article 1 and suppressing or preventing sink marks on the design surface 2 can hardly be obtained.

On the other hand, when the depth T of the gas storage concave portion 35 is 1 mm or more, although it is advantageous in securing a sufficient volume in the unfilled space 36, it is not practical because the amount of wasted resin materials increases.

Further, when the depth T of the gas storage concave portion 35 is 1 mm or more, the case where the sink mark adjusting protrusion 5 becomes a practical obstacle increases due to an increase in the protrusion dimension of the sink mark adjusting protrusion 5 from the molded article main plate portion back surface 3a.

The width W (width dimension) of the gas storage concave portion 35 is preferably from 0.3 mm to 1 mm, and more preferably from 0.3 mm to 0.7 mm.

If the width W of the gas storage concave portion 35 is less than 0.3 mm, when cutting the gas storage concave portion 35, a tool (cutting tool) used for the cutting is limited to one having a blade portion with a small thickness. For this reason, the strength of the edge of the blade portion of the cutting tool is reduced to lose the durability, and it becomes difficult to cut the gas storage concave portion 35.

Conversely, if the width W of the gas storage concave portion 35 is more than 1 mm (the length L is equal to or greater than the width W), although it is possible to increase the volume of the unfilled space 36 and the amount of stored gas, and to improve the effect of suppressing sink marks on the molded article design surface 3 associated therewith, the ratio of gas in the gas storage concave portion 35 with respect to an increase in the amount of resin used decreases.

The length L of the gas storage concave portion 35 is preferably from 0.3 mm to 10 mm, more preferably from 0.3 mm to 5 mm, and still more preferably from 0.3 mm to 2 mm. It is difficult to process the gas storage concave portion 35 having a length of less than 0.3 mm (the width is smaller than the length). If the length L of the gas storage concave portion 35 is 10 mm or more, not only it takes a long time to process, but also a large space is required for processing the required number of core molds, which is not practical.

On the back side molding surface of the core mold of the injection molding die, in a region where the introduction of gas (air or the like) from outside the mold to the back surface side of the resin molded article is easy (hereinafter, also referred to as a gas introduction easy region) due to the presence of a gas introduction path such as an ejector pin hole in which an ejector pin is arranged and an inclined core drive shaft hole in which an inclined core drive shaft is arranged, even if the gas storage concave portion 35 does not exist, when volume shrinkage associated with a decrease in temperature after molding of the resin molded article occurs, gas can be introduced from the gas introduction path between the portion of the resin molded article on the back surface side and the back side molding surface of the core mold. For this reason, when the volume shrinkage occurs due to the temperature decrease after molding of the resin molded article, in a portion that is in contact with the gas introduction easy region on the back side molding surface of the core mold of the back surface side portion of the resin molded article molded in the cavity, sink marks can be freely generated, and sink marks on the design surface of a molded article can be suppressed or prevented.

On the back side molding surface of the core mold of the injection molding die, in a region located between the ribs extending parallel to each other of the resin molded article or inside surrounded by the ribs, and where a gas introduction path such as an ejector pin hole and an inclined core drive shaft hole does not exist, which is a region on the back surface side of the resin molded article where the introduction of gas from the gas introduction path located outside this region is also difficult (hereinafter also referred to as an external gas introduction difficult region), by the formation of the gas storage concave portion 35, sink marks can be freely generated on the back surface side portion of the resin molded article, and the sink marks on the design surface of the molded article can be suppressed or prevented.

As shown in FIGS. 1 and 2, in a configuration in which the gas storage concave portion 35 is formed in the inter-rib groove region A1 of the core mold 30, even if there is no gas introduction path opening in the inter-rib groove region A1 such as an ejector pin hole or an inclined core drive shaft hole in which an inclined core drive shaft is arranged in the core mold 30, it is possible to suppress and prevent sink marks on the design surface 2 of the molded article.

In the core mold 30 of the injection molding die 10 shown in FIGS. 1 and 2, there is no gas introduction path opening to the inter-rib groove region A1, and there is a gas introduction path 37 opening to the molding surface main surface 33 outside the inter-rib groove region A1 on the molding surface main surface 33.

More specifically, the gas introduction path 37 of the core mold 30 illustrated in FIGS. 1 and 2 is an ejector pin hole for accommodating an ejector pin 38. In FIGS. 3 and 4, illustration of the gas introduction paths 37 and the ejector pins 38 is omitted.

As shown in FIG. 2, the resin molded article 1 molded in the cavity 11 of the injection molding die 10 has ribs 4 extending from the molded article main plate portion 3 in the cavity main portion 11A to the rib molding grooves 34 of the core mold 30. At the time of volume shrinkage due to the temperature decrease after molding of the resin molded article 1 in the cavity 11, the gas that spreads between the back side molding main surface 3 of the core mold 30 and the molded article main plate portion back surface 3a from the gas introduction path 37 outside the inter-rib groove region A1 is prevented from proceeding any further at the point of reaching the ribs 4 in some cases.

When a pair of ribs 4 that exist in parallel with each other at an interval D of not more than twice the thickness d of the molded article main plate portion 3 and over a length of 5 mm or more is present in the resin molded article 1 molded in the cavity 11, a case where the gas that spreads from the gas introduction path 37 outside the inter-rib groove region A1 as the generation of sink marks in the back surface side portion of the molded article main plate portion 3 proceeds does not enter between the inter-rib groove region A1 and the molded article main plate portion 3 is likely to occur.

In the core mold 30, a pair of rib molding grooves 34 which are present in parallel with each other at an interval D of not more than twice the thickness d of the molded article main plate portion 3 and over a length of 5 mm or more is formed. The inter-rib groove region A1 between the pair of rib molding grooves 34 is likely to become an external gas introduction difficult region where it is difficult to introduce a gas from the gas introduction path to an area with the molded article main plate portion back surface 3a.

However, the gas storage concave portion 35 is formed in the inter-rib groove region A1 of the core mold 30 of the injection molding die 10 shown in FIGS. 1 and 2. In the injection molding die 10, at the time of volume shrinkage due to the temperature decrease after the molding of the resin molded article 1 in the cavity 11, it is possible to allow the gas in the unfilled space 36 of the gas storage concave portion 35 to enter between the molded article main plate portion 3 and the inter-rib groove region A1 of the back side molding main surface 33 of the core mold 30, and the sink marks can be freely generated on the back surface 3a side portion of the molded article main plate portion 3.

The gas storage concave portion 35 realizes gas introduction between the resin molded article and the back side molding surface of the core mold when volume shrinkage due to a decrease in temperature after molding of the resin molded article occurs, and plays a role of freely generating sink marks on the back surface side portion of the resin molded article and suppressing or eliminating sink marks on the molded article design surface 2.

Therefore, on the back side molding surface of the core mold, in a region where the introduction of gas from a gas introduction path (such as an ejector pin hole and an inclined core drive shaft hole) between the resin molded article and the back side molding surface of the core mold during the resin molding is difficult (external gas introduction difficult region), by forming the gas storage concave portion 35, sink marks can be freely generated on the back surface side portion of the resin molded article without providing a separate gas introduction path, and sink marks on the molded article design surface 2 can be suppressed or eliminated.

Formation of the gas storage concave portion 35 is not limited to the formation in the external gas introduction difficult region of the back side molding main surface 33 of the core mold 30, but can also be formed in the gas introduction easy region.

The core mold 30 of the injection molding die 10 shown in FIGS. 1 and 2 can also adopt a configuration in which a gas introduction path 37 that opens to the inter-rib groove region A1 is formed.

### (Second embodiment)

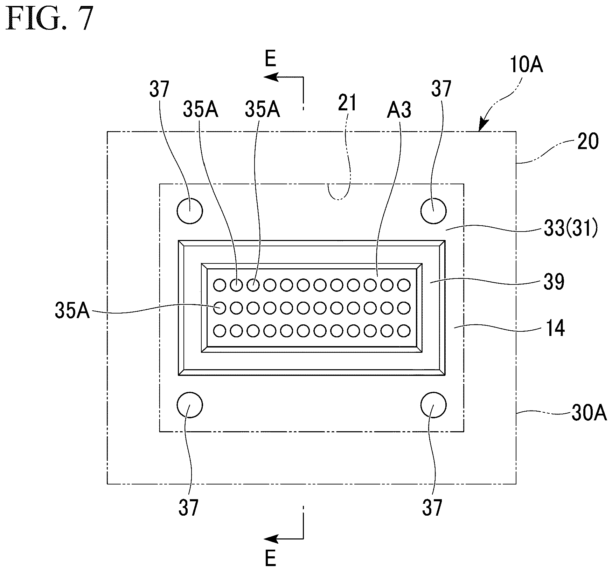

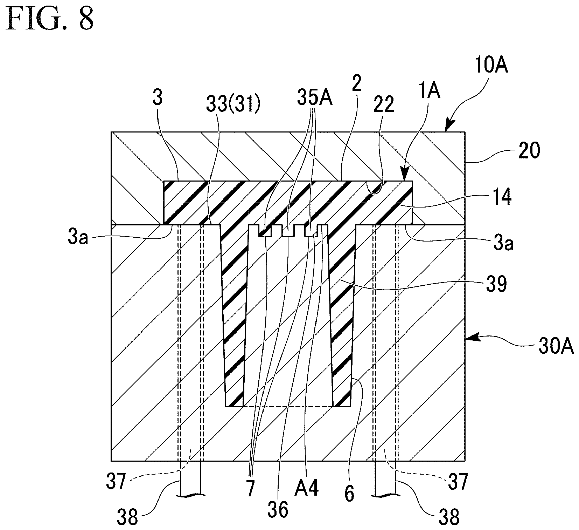

FIGS. 7 and 8 show an injection molding die according to a second embodiment of the present invention.

As shown in FIGS. 7 and 8, an injection molding die 10A of this embodiment is different from the injection molding die 10 in the first embodiment in that the core mold 30 is changed to a core mold 30A in which an endless rib molding groove 39 (hereinafter, also referred to as an endless rib molding groove) extending in a circumferential shape on the back side molding main surface 33 is formed, in place of the rib molding groove 34.

Regarding the injection molding die 10A of FIGS. 7 and 8, the same components as those of the injection molding die 10 in the first embodiment are denoted by the same reference numerals, and description thereof will be omitted or simplified.

A plurality of gas storage concave portions 35A are formed in a rib groove surrounding inner region A3 which is an inner region surrounded by the endless rib molding groove 39 on the back side molding main surface 33 of the core mold 30A of the injection molding die 10A in FIGS. 7 and 8.

In this core mold 30A, there is no gas introduction path opening to the rib groove surrounding inner region A3, and there is a gas introduction path 37 opening to the molding surface main surface 33 outside the rib groove surrounding inner region A3 on the molding surface main surface 33.

A cavity 14 including the endless rib molding groove 39 and the gas storage concave portion 35A of the core mold 30A is secured inside the injection molding die 10A in a mold-clamped state.

More specifically, the gas introduction path 37 of the core mold 30 illustrated in FIGS. 7 and 8 is an ejector pin hole for accommodating an ejector pin 38.

As shown in FIG. 8, a resin molded article 1A molded by the injection molding die 10A is different from the resin molded article 1 molded by the injection molding die 10 in the first embodiment in that endless ribs 6 having a circumferential shape in place of the ribs 4 and the sink mark adjusting protrusions 7 are configured to protrude from the back surface 3a of the main plate portion 3.

Regarding the resin molded article 1A, the same components as those of the resin molded article 1 molded by the injection molding die 10 in the first embodiment are denoted by the same reference numerals, and description thereof will be omitted or simplified.

The endless rib 6 is molded into a circumferential shape on the molded article main plate portion back surface 3a in the endless rib molding groove 39 of the core mold 30A.

The sink mark adjusting protrusions 7 are molded in the gas storage concave portion 35A of the core mold 30A.

As shown in FIG. 7, the gas storage concave portions 35A of the core mold 30A are concave portions formed by a cross section perpendicular to the depth T direction being recessed in a circular shape from the back side molding main surface 33 of the core mold 30A. The sink mark adjusting protrusions 7 are columnar protrusions generally along the inner surfaces of the gas storage concave portions 35A.

The gas storage concave portions 35A of the core mold 30A are concave portions formed with circular cross sections having an inner diameter (cross-sectional dimension) of 0.3 to 1.0 mm and a depth T of 0.15 to 1.00 mm.

The specific shape (cross-sectional shape) of the gas storage concave portions 35A of the core mold 30A is not limited to a circular shape, and can be suitably changed.

A plurality of sink mark adjusting protrusions 7 are formed corresponding to the plurality of gas storage concave portions 35A in the rib groove surrounding inner region A3.

The sink mark adjusting protrusions 7 of the resin molded article 1A protrude from a region inside the endless rib 6 on the back surface 3a of the main plate portion 3.

In the rib groove surrounding inner region A3, as the generation of sink marks on the back surface side portion of the molded article main plate portion 3 proceeds at the time of volume shrinkage due to the temperature decrease after the molding of the resin molded article 1 in the cavity 14, a case in which the gas spreading from the gas introduction path 37 outside the rib groove surrounding inner area A3 does not enter between the rib groove surrounding inner region A3 of the back side molding main surface 33 of the core mold 30A and the molded article main plate portion 3 is likely to occur.

However, a plurality of gas storage concave portions 35A are formed in the rib groove surrounding inner region A3 of the core mold 30A of the injection molding die 10A in FIGS. 7 and 8. For this reason, in the injection molding die 10A, it is possible to allow the gas in the unfilled space 36 (see FIG. 8) of the gas storage concave portion 35A, at the time of volume shrinkage due to the temperature decrease after the molding of the resin molded article 1A in the cavity 14, to enter between the molded article main plate portion 3 and the rib groove surrounding inner region A3 of the back side molding main surface 33 of the core mold 30A, the sink marks can be freely generated on the back surface 3a side portion of the molded article main plate portion 3, and the generation of sink marks on the design surface 2 can be suppressed or prevented.

As shown in FIG. 7, a plurality of gas storage concave portions 35A of the core mold 30A are formed by being arranged in a matrix in the rib groove surrounding inner region A3.

The core mold 30A preferably has a region A4 (hereinafter referred to as a gas storage concave portion gathering region) in which the gas storage concave portions 35A are formed on the back side molding main surface 33 at a density of 2 or more and 20 or less per 1 cm². It is more preferable that the core mold 30A has the gas storage concave portion gathering region A4 in which the gas storage concave portions 35 are formed at a density of 4 or more and 10 or less per 1 cm² on the back side molding main surface 33.

The gas storage concave portion gathering region A4 of the back side molding main surface 33 of the core mold 30A is advantageous in securing the amount of gas supplied which is sufficient for realizing free generation of sink marks in a region facing the gas storage concave portion gathering region A4 on the back surface side portion of the molded article main plate portion 3.

The configuration of the core mold having the gas storage concave portion gathering region A4 on the back side molding surface is not limited to those illustrated in FIGS. 7 and 8, and can be applied to the injection molding dies of various embodiments according to the present invention.

### (Third embodiment)

The position for forming the gas storage concave portion on the back side molding surface of the core mold is not limited to the back side molding main surface for molding the back surface of the molded article main plate portion.

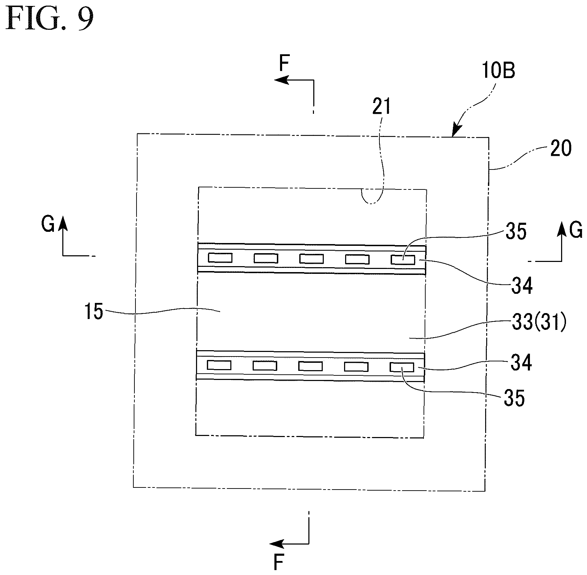

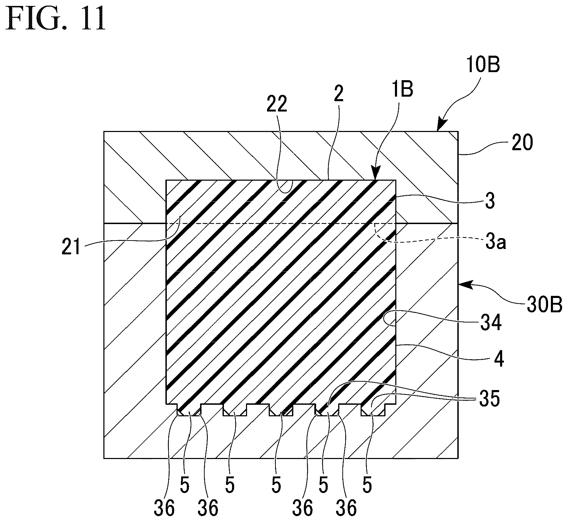

The position for forming the gas storage concave portion on the back side molding surface of the core mold may be, for example, the inner surface of the rib molding groove which is a part of the back side molding surface of the core mold as shown in FIGS. 9 to 11.

FIGS. 9 to 11 show an injection molding die according to a third embodiment of the present invention.

As shown in FIGS. 9 to 11, this injection molding die 10B is different from the injection molding die 10 in the first embodiment in that the core mold 30 is changed to a core mold 30B in which gas storage concave portions 35 recessed from a groove bottom surface 34a of the rib molding groove 34 (rib molding groove inner surface) are formed.

Regarding the injection molding die 10B in FIGS. 9 to 11, the same components as those of the injection molding die 10 in the first embodiment are denoted by the same reference numerals, and the description thereof will be omitted or simplified.

In the core mold 30B of the injection molding die 10B of the present embodiment, the gas storage concave portion 35 formed on the molding surface main surface 33 of the core mold 30 of the injection molding die 10 in the first embodiment is omitted, and the gas storage concave portions 35 recessed from the groove bottom surface 34a of the rib molding groove 34 are formed. The configuration of the core mold 30B other than the omission of the gas storage concave portion 35 of the molding surface main surface 33 and the formation of the gas storage concave portions 35 recessed from the groove bottom surface 34a of the rib molding groove 34 is the same as that of the core mold 30 of the injection molding die 10 in the first embodiment.

The illustration of the gas introduction path 37 and the ejector pins 38 is omitted in FIGS. 9 to 11.

As shown in FIGS. 9 to 11, the gas storage concave portions 35 of the core mold 30B are formed at a plurality of locations on the groove bottom surface 34a of the rib molding groove 34.

In the resin molded article 1B molded by the injection molding die 10B in FIGS. 9 to 11, a plurality of sink mark adjusting protrusions 5 are protruded from the tip of the rib 4 of the resin molded article 1 molded by the injection molding die 10 in the first embodiment. The sink mark adjusting protrusions 5 at the tip of the rib 4 are molded by the gas storage concave portions 35 at a plurality of locations on the groove bottom surface 34a of the rib molding groove 34 of the core mold 30B. The sink mark adjusting protrusions 5 at the tip of the rib 4 are formed at a plurality of locations in the longitudinal direction of the rib 4.

When the injection molding die 10B in FIGS. 9 to 11 is in a mold-clamped state, a cavity 15 can be secured therein, which is configured of a cavity main portion 11A and a gas storage concave portion 35 similar to those of the injection molding die 10 in the first embodiment.

According to the injection molding die 10B shown in FIGS. 9 to 11, at the time of volume shrinkage due to the temperature decrease after the molding of the resin molded article 1B in the cavity 15, it is possible to allow the gas in the unfilled space 36 of the gas storage concave portion 35 to enter between the rib 4 in the rib molding groove 34 of the core mold 30B and the inner surface of the rib molding groove 34. As a result, the sink marks of the rib 4 in the rib molding groove 34 can be freely generated, and the sink marks on the design surface 3 of the resin molded article 1B can be suppressed or prevented.

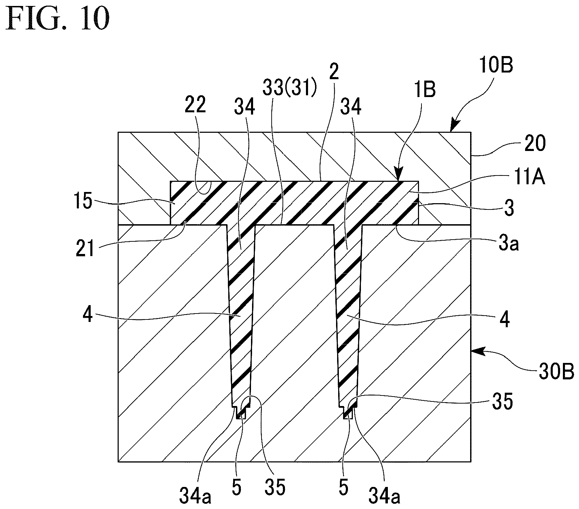

The gas storage concave portion formed by being recessed from the groove bottom surface of the rib molding groove of the core mold is not limited to the embodiment in FIGS. 9 and 10, but can be applied, for example, to rib molding grooves of various shapes such as endless rib grooves.

### (Test example)

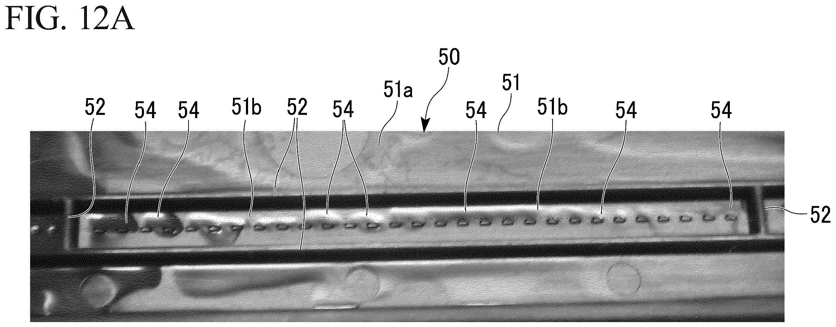

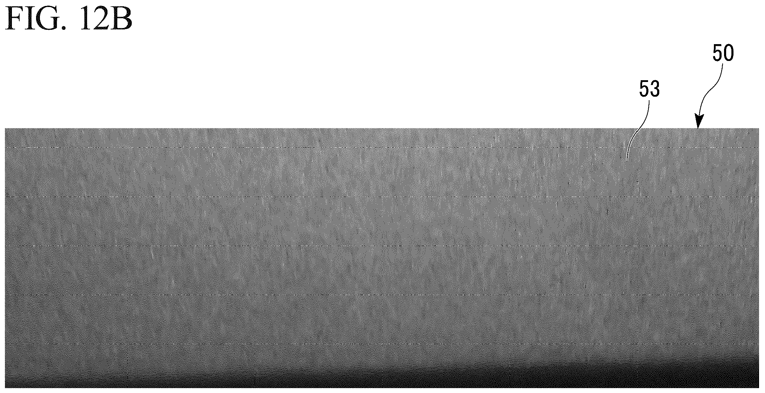

FIG. 12A is a diagram showing the back surface side of a resin molded article 50 produced on a trial basis (resin molded article as a prototype example) using an injection molding die according to the embodiment of the present invention. Further, FIG. 12B is a diagram showing the side of a design surface 53 of the resin molded article 50 produced on a trial basis (resin molded article as the prototype example) using an injection molding die according to the embodiment of the present invention.

As shown in FIG. 12A, the resin molded article 50 has ribs 52 on a back surface 51a of a main plate portion 51. The ribs 52 are formed in a grid-like shape on the back surface 51a of the main plate portion 51.

On the back surface 51a of the main plate portion 51, there is a rib surrounding inner region 51b surrounded by the ribs 52. Further, the resin molded article 50 has a plurality of sink mark adjusting protrusions 54 protruding from the rib surrounding inner region 51b on the back surface 51a of the main plate portion 51.

The injection molding die used for molding the resin molded article 50 shown in FIGS. 12A and 12B includes a core mold having a configuration in which a rib molding groove for molding the ribs 52 and a gas storage concave portion for molding the sink mark adjusting protrusion 5 are formed by being recessed from a back side molding main surface for molding the back surface 51a of the main plate portion 51 of the resin molded article 50.

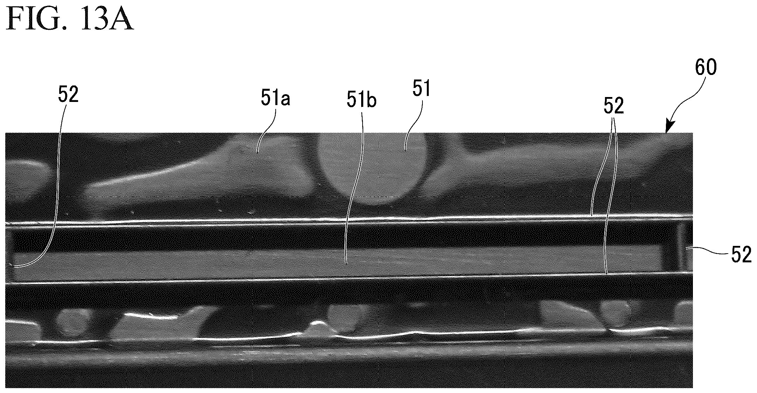

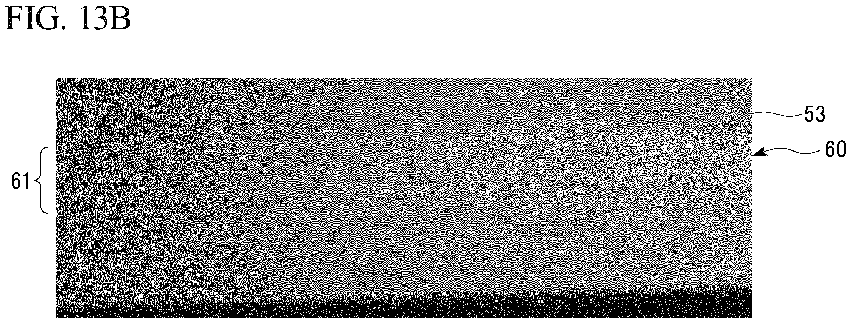

FIG. 13A is a diagram showing the back surface side of a resin molded article 60 of a comparative example. Further, FIG. 13B is a diagram showing the design surface 53 side of the resin molded article 60 of the comparative example.

The resin molded article 60 shown in FIGS. 13A and 13B was produced using an injection molding die having the same configuration as that of the injection molding die for molding the resin molded article 50 produced on a trial basis, except that the gas storage concave portion of the core mold was omitted.

In FIGS. 13A and 13B, portions corresponding to the respective portions in the prototype example in FIGS. 12A and 12B in the resin molded article 60 of the comparative example are denoted by the same reference numerals.

As shown in FIG. 13A, the rib surrounding inner region 51b of the resin molded article 60 of the comparative example had a smooth surface, and the generation of sink marks was not observed.

On the other hand, as shown in FIG. 13B, on the design surface 53 of the resin molded article 60 of the comparative example, a stripe-shaped sink mark portion 61 was formed at a position corresponding to the rib 52 on the back surface side of the molded article with a visible depth.

As shown in FIG. 12A, a plurality of sink mark portions 54 having a visible depth were formed in the rib surrounding inner region 51b of the resin molded article 50 as the prototype example.

On the other hand, as shown in FIG. 12B, no visible sink marks were present on the design surface 53 of the resin molded article 50 as the prototype example.

From FIGS. 12A, 12B, 13A, and 13B, in the resin molded article 50 as the prototype example, it is considered that sink marks can be concentrated on the rib surrounding inner region 51b on the back surface 51a side of the main plate portion by using an injection molding die having a core mold in which a gas storage concave portion is formed, and as a result, sink marks on the design surface 53 can be prevented.

Although the present invention has been described above based on the best mode, the present invention is not limited to the above-described best mode, and various modifications can be made without departing from the scope and gist of the present invention.

The gas storage concave portion may be any one that can be recessed by securing a depth of 0.15 to 1.00 mm from the back side molding surface and can secure an unfilled space in which the molten resin that has flowed into the cavity is not filled, and the cross-sectional shape and cross-sectional dimension perpendicular to the depth direction can be appropriately set.

The rib groove formed endlessly along the back side molding main surface of the core mold is not limited to one having an endless structure, and may be one having a configuration forming, for example, a generally circumferential shape, and a discontinuity between both ends that are approaching each other in the extending direction.

The core mold of the injection molding die is not limited to a configuration having only one of the inter-rib groove region, which is a region between rib molding grooves existing at an interval of not more than twice the thickness of the main plate portion of the resin molded article and in parallel to each other over a length of 5 mm or more, and the rib groove surrounding inner region, which is the inner region surrounded by the rib molding grooves formed in an endless manner, and a configuration having both the inter-rib groove region and the rib groove surrounding inner region can also be adopted.

The core mold of the injection molding die may have a configuration in which a gas introduction path such as an ejector pin hole and an inclined core drive shaft hole is not formed, and a gas storage concave portion is formed.

The number of gas storage concave portions formed on the back side molding surface of the core mold does not need to be plural, but may be only one.

The gas storage concave portion can be formed at an appropriate position on the back side molding surface of the core mold. The position for forming the gas storage concave portion is not limited to, for example, one of the back side molding main surface and the inner surface of the rib molding groove (for example, the groove bottom surface), and may be both the back side molding main surface and the inner surface of the rib molding groove (for example, the groove bottom surface).

### [Industrial Applicability]

Even if there is a region where it is difficult to introduce outside air between the molding surface (back side molding surface) of the core mold for molding the back surface side opposite to the design surface of the resin molded article and the back side surface of the resin molded article, it is possible to provide an injection molding die capable of preventing the generation of sink marks on the design surface of the molded article by concentrating sink marks on the back surface side portion of the molded article molded by this region.

### [Reference Signs List]

1, 1A, 1B: Resin molded article;
IP: Molten resin;
2: Design surface;
3: Main plate portion;
3a: Back surface of main plate portion;
4: Rib;
5: Sink mark adjusting protrusion;
6: Rib (endless rib);
7: Sink mark adjusting protrusion;
10, 10A, 10B: Injection molding die;
11: Cavity;
11A: Cavity main portion;
12: Gap between inner surface of gas storage concave portion and sink mark adjusting protrusion;
13: Gap between back side molding main surface of core mold and main plate portion of resin molded article;
14: Cavity;
15: Cavity;
20: Cavity mold;
21: Concave portion (molding concave portion);
22: Inner bottom surface of molding concave portion (design surface molding surface);
30, 30A, 30B: Core mold;
31: Back side molding surface;
33: Back side molding main surface;
34: Rib molding groove;
34a: Groove bottom surface of rib molding groove;
35: Gas storage concave portion;
35a: Bottom surface of gas storage concave portion;
35b: Inner surface of gas storage concave portion;
36: Unfilled space;
37: Gas introduction path;
38: Ejector pin;
39: Rib molding groove (endless rib molding groove);
50: Resin molded article;
51: Main plate portion;
51a: Back surface of main plate portion;
51b: Rib surrounding inner region;
52: Rib;
53: Design surface;
54: Sink mark portion;
A1: Inter-rib groove region;
A2: Inter-rib region;
A3: Rib groove surrounding inner region;
A4: gas storage concave portion gathering region;
D: Rib groove interval;
d: Main plate portion thickness dimension

## Claims

1. An injection molding die comprising:
a cavity mold in which a concave portion for forming a design surface of a resin molded article is formed; and
a core mold that is present in a freely openable and closable manner with respect to said cavity mold, and forms a cavity including said concave portion with said cavity mold when closed and combined with said cavity mold,
wherein in said core mold, a back side molding surface for molding a back surface side of said resin molded article opposite to said design surface, and a gas storage concave portion for securing a depth of 0.15 to 1.00 mm to be recessed from said back side molding surface and securing an unfilled space in which a molten resin allowed to flow into said cavity is not filled, are formed.

2. The injection molding die according to Claim 1,
wherein said gas storage concave portion is formed to have a width of 0.3 to 1.0 mm and a length of 0.3 to 10 mm.

3. The injection molding die according to Claim 1 or 2,
wherein a region in which said gas storage concave portion is formed at a density of 2 or more per 1 cm² is present on said back side molding surface of said core mold.

4. The injection molding die according to any one of Claims 1 to 3,
wherein said resin molded article comprises a main plate portion forming said design surface, and a rib protruding from a back surface of said main plate portion opposite to said design surface,
in said core mold, a back side molding main surface that serves as a part of said back side molding surface and molds the back surface of said main plate portion of said resin molded article, and a rib molding groove recessed from said back side molding main surface corresponding to the rib of said resin molded article are formed; and
on said back side molding main surface of said core mold, one or both of an inter-rib groove region which is a region between said rib molding grooves present at an interval of not more than twice the thickness of said main plate portion of said resin molded article and in parallel to each other over a length of 5 mm or more, and a rib groove surrounding inner region which is an inner region surrounded by said rib molding groove formed in an endless manner, is present; and said gas storage concave portion is formed in one or both of said inter-rib groove region and said rib groove surrounding inner region.
